# FASCICULE DE BREVET EUROPEEN

(11) **EP 0 794 725 B1**
(45) Date de publication et mention de la délivrance du brevet: **29.04.1998**
(21) Numéro de dépôt: 95941119.0
(22) Date de dépôt: 21.11.1995
(51) Int. Cl.: A47J 43/07, A47J 42/38

(54) **PROCEDE DE REALISATION D'UNE SAUPOUDREUSE D'INGREDIENTS SECS HACHES, TELS QUE CHOCOLAT, NOISETTES, AMANDES OU ANALOGUE**
VERFAHREN ZUR REALISIERUNG EINER PUDERDOSE FÜR GEMAHLENE TROCKENE INGREDIENZEN WIE SCHOKOLADE, NüSSE, MANDELN ODER DERGLEICHEN
METHOD FOR MAKING A DREDGER FOR CHOPPED DRY INGREDIENTS SUCH AS CHOCOLATE, NUTS, ALMONDS AND THE LIKE

(30) Priorité: 28.11.1994 FR 9414237
(43) Date de publication de la demande: 17.09.1997
(73) Titulaire: MOULINEX S.A., 75008 Paris (FR)
(72) Inventeur: MARRIERE, Marc, F-53300 Ambrières-les-Vallées (FR); TROCHERIE, Jean-Pierre, F-53370 Saint-Pierre-des-Nids (FR)
(74) Mandataire: Busquets, Jean-Pierre
(86) Numéro de dépôt international: FR9501531
(87) Numéro de publication internationale: WO9616585

(56) Documents cités:
- GB-A- 698 697
- GB-A- 2 131 709
- US-A- 3 417 972

## Description

La présente invention se rapporte à un procédé de réalisation d'une saupoudreuse d'ingrédients secs hachés, tels que chocolat, noisettes, amandes ou analogue, qui sont obtenus au moyen d'un hachoir ménager du type comportant un bol dans lequel s'étend verticalement un arbre dont l'extrémité inférieure porte un couteau rotatif et est engagée de manière amovible dans un palier réalisé sur le fond du bol, et un bloc moteur comprenant un boîtier monté de manière amovible sur le bol et renfermant un moteur électrique dont l'arbre de sortie est adapté à venir s'accoupler avec l'arbre portant le couteau (voir par exemple le document US-A-3 417 972).

Dans le domaine de la préparation culinaire, on a l'habitude d'opposer aux ingrédients secs hachés, tels que le chocolat, les noisettes, les amandes, etc. qui sont destinés à garnir un mets, les ingrédients "humides" hachés, tels que le persil, l'ail, l'oignon, etc. qui, eux, servent à assaisonner un mets.

Les saupoudreuses, telles que les salières, sont bien connues en soi et sont constituées par un petit flacon contenant le sel et fermé par un bouchon percé de trous servant à couvrir de sel un mets. Pour des raisons de commodité d'emploi, on ressent de plus en plus le besoin d'utiliser, lors de la préparation d'un mets, une saupoudreuse classique d'un ingrédient sec haché, tel que par exemple le chocolat, les noisettes ou encore les amandes, destiné à agrémenter le mets.

L'invention a notamment pour but de répondre à ce besoin et de proposer un procédé de réalisation d'une saupoudreuse d'ingrédients secs hachés, qui soit simple et économique.

Selon l'invention, le procédé de réalisation d'une saupoudreuse d'ingrédients secs obtenus par hachage au moyen d'un hachoir ménager du type mentionné précédemment, est caractérisé en ce qu'il consiste, après hachage des ingrédients secs, à retirer le bloc moteur et l'arbre porte-couteau du hachoir, puis à fixer, de manière amovible sur le bol du hachoir contenant lesdits ingrédients secs hachés, un couvercle percé de trous adaptés à laisser passer lesdits ingrédients lors du renversement du bol.

Ainsi, grâce à l'amovibilité du bloc moteur et de l'arbre porte-couteau du hachoir, l'invention utilise judicieusement à profit le bol même du hachoir contenant l'ingrédient sec haché pour constituer le bol ou flacon de la saupoudreuse, auquel est adjoint simplement, sous forme d'accessoire, le couvercle perforé, permettant ainsi de se dispenser de la fabrication d'un autre bol pour la saupoudreuse et rendant hygiénique la saupoudreuse ainsi réalisée. Par ailleurs, grâce à l'invention, on transforme en quelque sorte le hachoir, après utilisation, en une saupoudreuse, moyennant l'adjonction du couvercle perforé.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un exemple de réalisation d'un hachoir en fonctionnement ;
- la figure 2 est une vue schématique en coupe verticale d'une saupoudreuse d'ingrédients secs hachés selon l'invention ;
- la figure 3 est une vue de dessus d'un couvercle perforé de la saupoudreuse de la figure 2 ; et
- la figure 4 est une vue schématique en coupe verticale d'un autre exemple de réalisation d'un hachoir en fonctionnement.

Sur ces différentes figures, les mêmes références se rapportent aux mêmes éléments.

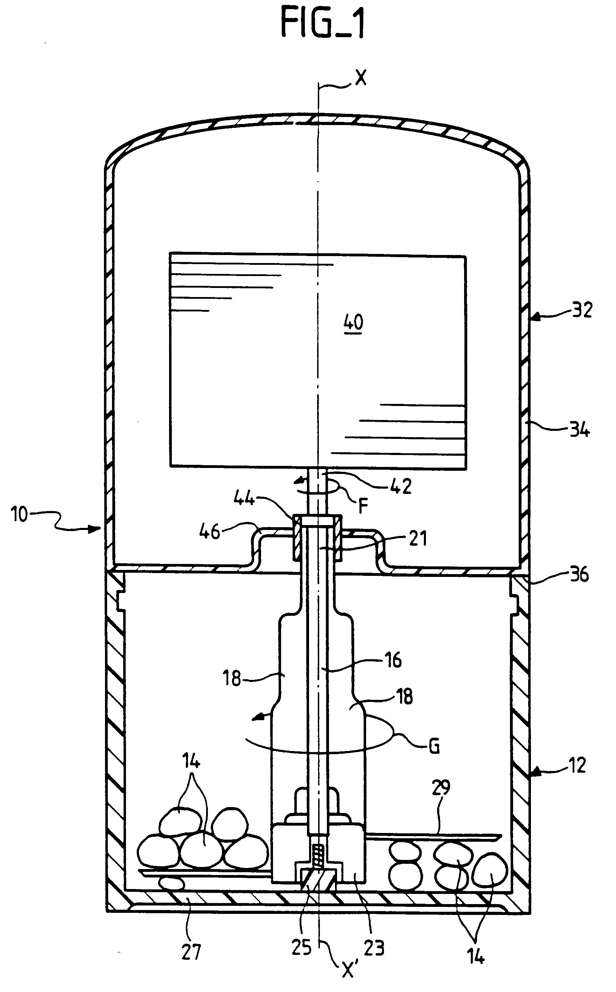

Suivant un exemple de réalisation illustré à la figure 1, on a représenté en 10 un petit hachoir ménager de forme générale cylindrique d'axe XX', comportant un bol ouvert de travail 12 qui contient des ingrédients secs 14, tels que par exemple des morceaux de chocolat, et dans lequel s'étend verticalement, selon l'axe XX', un arbre rotatif 16 pourvu latéralement de larges nervures verticales de brassage 18. L'arbre 16 présente une extrémité supérieure 21 qui fait légèrement saillie hors du bol 12 et une extrémité inférieure 23 qui, d'une part, est engagée de manière amovible dans un palier cylindrique 25 axé sur l'axe XX' et monté fixe sur la paroi de fond 27 du bol 12, et d'autre part, porte un couteau surmoulé 29, par exemple à deux lames.

Le hachoir 10, figure 1, comporte en outre un bloc moteur 32 comprenant un boîtier 34 monté de manière amovible sur le bord périphérique supérieur 36 du bol 12 et renfermant un moteur électrique illustré schématiquement en 40 sur la figure 1, dont l'arbre de sortie 42 est adapté à s'accoupler coaxialement avec l'arbre porte-couteau 16 par l'intermédiaire d'un entraîneur 44 solidaire dudit arbre 42 et débouchant sur le fond 46 du boîtier 34.

Sur la figure 1, on a symbolisé par les deux flèches F et G les mouvements de rotation respectifs de l'arbre de sortie 42 du moteur 40 et de l'arbre 16 portant le couteau 29.

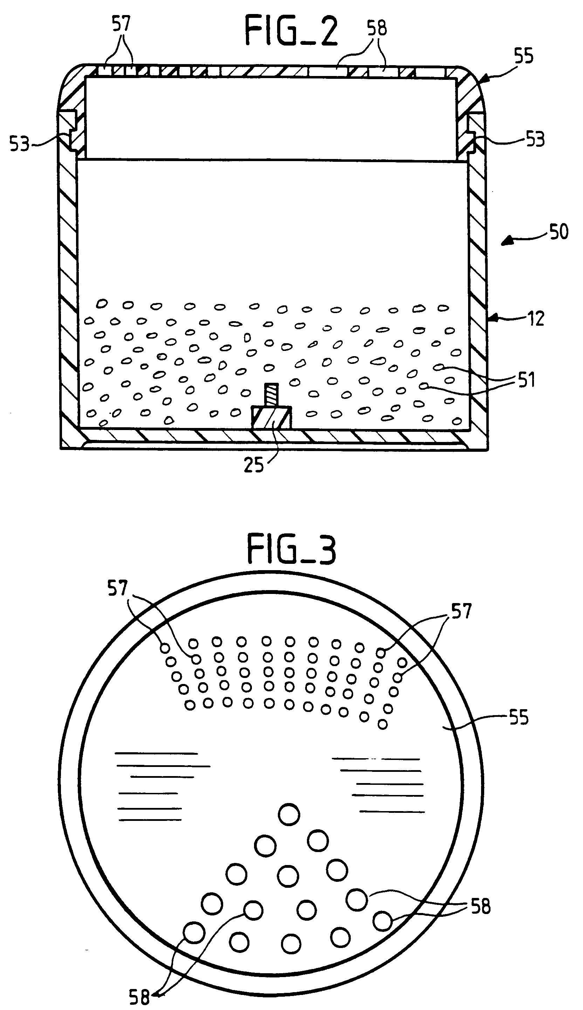

En se reportant aux figures 1 et 2, on va maintenant décrire le procédé de réalisation, conforme à l'invention, d'une saupoudreuse, désignée par la référence globale 50 à la figure 2, et destinée à répandre, par exemple sur un gâteau, du chocolat en poudre 51 (figure 2) obtenu au moyen du hachoir 10 de la figure 1.

Après hachage des morceaux de chocolat 14, figure 1, l'utilisateur enlève le bloc moteur 32 puis l'arbre porte-couteau 16 du hachoir 10, puis fixe de manière amovible, par exemple par un encliquetage élastique comme illustré en 53 sur la figure 2, un couvercle cylindrique perforé 55 sur le bol 12 du hachoir contenant la poudre de chocolat 51 destinée, par renversement du bol 12, au saupoudrage du gâteau dans l'exemple choisi.

Dans le mode d'exécution illustré aux figures 2 et 3, le couvercle 55 de la saupoudreuse 50 ainsi obtenue, est percé de deux séries de trous ronds de diamètres différents 57, respectivement 58, répartis suivant deux secteurs diamétralement opposés du couvercle 55 de manière à obtenir une saupoudreuse formant un sélecteur entre les différentes granulométries des ingrédients hachés ; par exemple, les trous 57 sont destinés au saupoudrage du chocolat, tandis que les trous 58 sont destinés au saupoudrage des noisettes ou des amandes hachées.

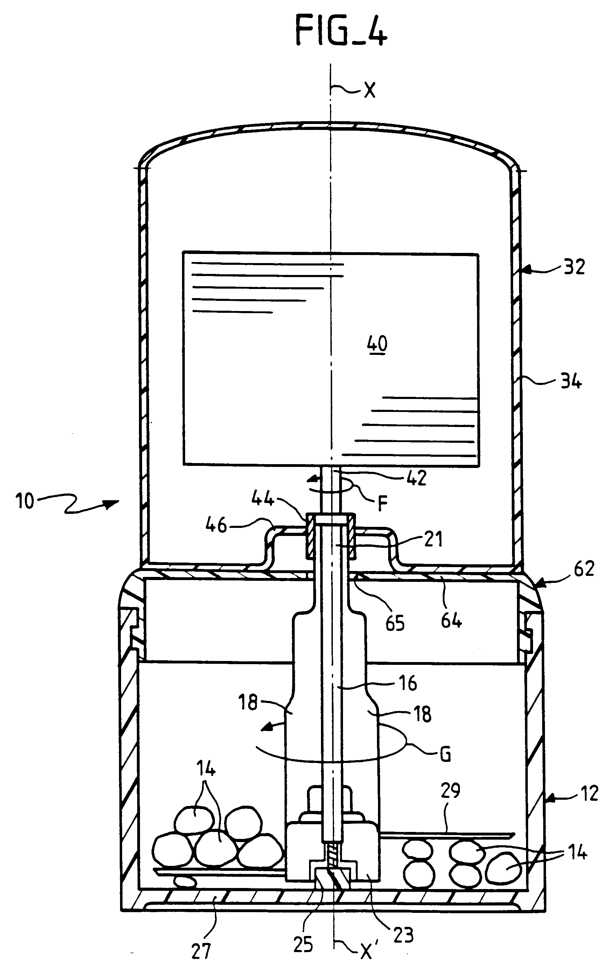

Dans l'exemple de réalisation illustré à la figure 4, le hachoir 10 est identique à celui décrit en référence à la figure 1, excepté le fait que, dans cet exemple, le bol 12 du hachoir 10 est fermé par un couvercle amovible de sécurité 62 dont la face supérieure 64 présente une ouverture 65 à travers laquelle fait légèrement saillie l'extrémité supérieure 21 de l'arbre porte-couteau 16.

Suivant cet exemple, figure 4, la réalisation de la saupoudreuse 50 (figure 2) est obtenue d'abord par le retrait du bloc moteur 32, du couvercle 62 et de l'arbre porte-couteau 16 du hachoir 10, puis comme précédemment, par la fixation amovible du couvercle perforé 55, du type à deux séries de trous ronds 57 et 58 de diamètres différents (figure 3), sur le bol 12 du hachoir contenant, comme dans l'exemple précédent, de la poudre de chocolat 51 destinée, par renversement du bol 12, au saupoudrage d'un gâteau.

Le procédé de réalisation de la saupoudreuse d'ingrédients secs obtenus par hachage, selon l'invention que l'on vient de décrire, est donc particulièrement avantageux sur le plan de sa simplicité grâce à une mise en oeuvre directe à partir d'un petit hachoir ménager de type classique.

## Revendications

1. Procédé de réalisation d'une saupoudreuse d'ingrédients secs hachés, tels que chocolat, noisettes, amandes ou analogue, qui sont obtenus au moyen d'un hachoir ménager (10) du type comportant un bol (12) dans lequel s'étend verticalement un arbre (16) dont l'extrémité inférieure (23) porte un couteau rotatif (29) et est engagée de manière amovible dans un palier (25) réalisé sur le fond (27) du bol (12), et un bloc moteur (32) comprenant un boîtier (34) monté de manière amovible sur le bol (12) et renfermant un moteur électrique (40) dont l'arbre de sortie (42) est adapté à venir s'accoupler avec l'arbre (16) portant le couteau, **caractérisé en ce qu'**il consiste, après hachage des ingrédients secs (14), à retirer le bloc moteur (32) et l'arbre porte-couteau (16) du hachoir (10), puis à fixer, de manière amovible sur le bol (12) du hachoir contenant lesdits ingrédients secs hachés (51), un couvercle (55) percé de trous (57,58) adaptés à laisser passer lesdits ingrédients lors du renversement du bol (12).

2. Procédé selon la revendication 1, pour lequel le bol (12) du hachoir (10) est fermé par un couvercle amovible (62) hors duquel fait saillie l'extrémité supérieure (21) de l'arbre porte-couteau (16), **caractérisé en ce que** l'opération de fixation du couvercle perforé (55) est précédée d'une opération consistant à retirer le couvercle (62) de fermeture du bol (12) du hachoir en même temps que le bloc moteur (32) et l'arbre porte-couteau (16), ledit couvercle (62) du bol (12) étant alors remplacé par le couvercle perforé (55).

3. Procédé selon la revendication 1 ou 2, **caractérisé en ce que** l'opération de fixation du couvercle perforé (55) sur le bol (12) du hachoir consiste en un encliquetage élastique (53) dudit couvercle perforé (55).

## Claims

1. Method for making a dredger for chopped dry ingredients such as chocolate, hazel nuts, almonds and the like, which are obtained by means of a domestic chopper (10) of the type having a bowl (12) in which there extends vertically a shaft (16) whose bottom end (23) carries a rotating knife (29) and is removably engaged in a bearing (25) produced on the bottom (27) of the bowl (12), and a motor unit (32) comprising a casing (34) removably mounted on the bowl (12) and enclosing an electric motor (40) whose output shaft (42) is adapted to be coupled with the shaft (16) carrying the knife,
**characterised in that** it consists, after the dry ingredients (14) have been chopped, of withdrawing the motor unit (32) and the knife-carrier shaft (16) from the chopper (10), then fixing, removably on the bowl (12) of the chopper containing said chopped dry ingredients (51), a cover (55) with holes (57, 58) adapted to allow said ingredients to pass through when the bowl (12) is turned over.

2. Method according to claim 1, for which the bowl (12) of the chopper (10) is closed off by a removable cover (62) out of which projects the top end (21) of the knife-carrier shaft (16),
**characterised in that** the operation of fixing the perforated cover (55) is preceded by an operation consisting of withdrawing the cover (62) closing off the bowl (12) of the chopper at the same time as the motor unit (32) and the knife-carrier shaft (16), said cover (62) of the bowl (12) then being replaced by the perforated cover (55).

3. Method according to claim 1 or 2,
**characterised in that** the operation of fixing the perforated cover (55) on the bowl (12) of the chopper consists of an elastic snapping-on (53) of the perforated cover (55).

## Patentansprüche

1. Verfahren zur Herstellung eines Streuers für gehackte trockene Zutaten, wie Schokolade, Nüsse, Mandeln oder dergleichen, die mittels eines Küchen-Hackgeräts (10) vom Typ mit einem Gefäß (12) erhalten werden, in welchem sich vertikal eine Welle (16) erstreckt, deren unteres Ende (23) ein drehbares Messer (29) trägt und abnehmbar in ein am Boden (27) des Gefäßes (12) ausgebildetes Lager (25) eingeführt ist, und mit einem Motorblock (32), der ein Gehäuse (34) aufweist, das abnehmbar auf das Gefäß (12) montiert ist und einen Elektromotor (40) umschließt, dessen Abtriebswelle (42) an die das Messer tragende Welle (16) ankuppelbar ist, **dadurch gekennzeichnet, daß** es darin besteht, nach dem Hacken der trockenen Zutaten (14) den Motorblock (32) und die das Messer tragende Welle (16) des Hackgeräts (10) abzunehmen und danach auf dem die trockenen gehackten Zutaten (51) enthaltenden Gefäß (12) des Hackgeräts einen Deckel (55) abnehmbar zu befestigen, der von Löchern (57, 58) durchbohrt ist, die bei Umschwenken des Gefäßes (12) die Zutaten austreten lassen.

2. Verfahren nach Anspruch 1, worin das Gefäß (12) des Hackgeräts (10) durch einen abnehmbaren Deckel (62) geschlossen ist, durch welchen das obere Ende (21) der das Messer tragenden Welle (16) hervorsteht, **dadurch gekennzeichnet, daß** dem Arbeitsschritt der Befestigung des perforierten Deckels (55) ein Arbeitsschritt vorausgeht, der darin besteht, den Deckel (62) zum Schließen des Gefäßes (12) des Hackgeräts gleichzeitig mit dem Motorblock (32) und der das Messer tragenden Welle (16) herauszunehmen, woraufhin der Deckel (62) des Gefäßes (12) dann durch den perforierten Deckel (55) ersetzt wird.

3. Verfahren nach Anspruch 1 oder 2, **dadurch gekennzeichnet, daß** der Arbeitsschritt der Befestigung des perforierten Deckels (55) auf dem Gefäß (12) des Hackgeräts aus einem elastischen Einklicken (53) des perforierten Deckels (55) besteht.
